# EUROPEAN PATENT SPECIFICATION

(11) **EP 4 280 673 B1**
(45) Date of publication and mention of the grant of the patent: **24.12.2025**
(21) Application number: 22738936.8
(22) Date of filing: 07.01.2022
(51) Int. Cl.: H04W 28/02, H04L 47/70, H04L 65/80, H04W 76/12, H04W 4/02

(54) **TRANSMISSION METHOD, TRANSMISSION APPARATUS, COMMUNICATION DEVICE, AND READABLE STORAGE MEDIUM**
ÜBERTRAGUNGSVERFAHREN, ÜBERTRAGUNGSVORRICHTUNG, KOMMUNIKATIONSVORRICHTUNG UND LESBARES SPEICHERMEDIUM
PROCÉDÉ DE TRANSMISSION, APPAREIL DE TRANSMISSION, DISPOSITIF DE COMMUNICATION ET SUPPORT DE STOCKAGE LISIBLE

(30) Priority: 14.01.2021 CN 202110049371
(43) Date of publication of application: 22.11.2023
(73) Proprietor: Vivo Mobile Communication Co., Ltd., Dongguan, Guangdong 523863 (CN)
(72) Inventor: KANG, Yanchao, Dongguan, Guangdong 523863 (CN)
(74) Representative: Conti, Marco
(86) International application number: PCT/CN2022/070718
(87) International publication number: WO 2022/152055

(56) References cited:
- WO-A1-2019/194954
- CN-A- 109 428 909
- CN-A- 110 169 089
- CN-A- 110 771 251
- US-A1- 2018 270 778
- US-A1- 2020 112 907
- "3rd Generation Partnership Project; Technical Specification Group Services and System Aspects; Architecture enhancements for 5G System (5GS) to support Vehicle-to-Everything (V2X) services (Release 16)", no. V16.5.0, 17 December 2020 (2020-12-17), pages 1 - 58, XP051975165, Retrieved from the Internet <URL:https://ftp.3gpp.org/Specs/archive/23_series/23.287/23287-g50.zip 23287-g50.docx> [retrieved on 20201217]
- CATT, CHINA TELECOM, ERICSSON: "Clarifications on policy decisions based on network analytics", 3GPP DRAFT; S2-2003330, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic, Elbonia ;20200420 - 20200424, 24 April 2020 (2020-04-24), Mobile Competence Centre ; 650, route des Lucioles ; F-06921 Sophia-Antipolis Cedex ; France , XP051878776

## Description

### TECHNICAL FIELD

This application pertains to the field of communications technologies, and specifically, relates to a transmission method, a transmission apparatus, a communication device, and a readable storage medium.

### BACKGROUND

In existing communication networks, the network usually allocates communication resources for a terminal based on a request of the terminal. Such an allocation mode is likely to cause network congestion, which makes the network unable to proactively allocate resources globally.

3GPP Technical Specification TS 23.287 V16.5.0 specifies Architecture enhancements for 5G System (5GS) to support Vehicle-to-Everything (V2X) services. The provisioning to UE for V2X communication over PCS and Uu reference points is controlled by the PCF and may be triggered by UE. The PCF includes the V2X Policy/parameters for V2X communications over PCS reference point and/or the V2X Policy/parameters for V2X communications over Uu reference point.

US 2020112907A1 discloses methods and apparatus for notifying Quality of Service (QoS) information to User Equipment (UE), Users, and Application server. the network QoS and/or statistics of QoS parameters may be analyzed by using one or more functions such as Network Data Analytics Function (NWDAF). Control plane (CP) functions may also be provided which may send the QoS information to the UE depending on the UE subscription, application and/or network slice.

### SUMMARY

Embodiments of this application provide a transmission method, a communication device, and a readable storage medium as defined in the appended set of claims, so as to resolve the problem of proneness to network congestion during allocation of communication resources to terminals by a network in the related art.

In the embodiments of this application, the network entity obtains the first information specific to the target transmission data and sent by the application server, so that the network entity can predict, based on the first information, transmission requirements of the terminal for the target transmission data in advance and can formulate in advance a session management policy for the target data transmission for the terminal, so as to manage the session management channel between the terminal and the application server for the target transmission data, reserve for the terminal in advance communication resources required for data transmission, and proactively configure the communication resources for the terminal. This implements global allocation of communication resources, avoids network congestion, and improves efficiency of data transmission.

### BRIEF DESCRIPTION OF DRAWINGS

FIG. 1 is a block diagram of a wireless communication system to which the embodiments of this application are applicable;
FIG. 2 is a flowchart of a transmission method according to an embodiment of this application;
FIG. 2a is a schematic diagram of a transmission scenario to which the embodiments of this application are applicable;
FIG. 2b is a schematic diagram of a transmission scenario to which the embodiments of this application are applicable;
FIG. 3 is a flowchart of another transmission method according to an embodiment of this application;
FIG. 4 is a flowchart of another transmission method according to an embodiment of this application;
FIG. 5 is a flowchart of another transmission method according to an embodiment of this application;
FIG. 6 is a structural diagram of a transmission apparatus according to an embodiment of this application not covered by the claims;
FIG. 7 is a structural diagram of another transmission apparatus according to an embodiment of this application not covered by the claims;
FIG. 8 is a structural diagram of another transmission apparatus according to an embodiment of this application not covered by the claims; and
FIG. 9 is a structural diagram of a communication device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, in the specification and claims, "and/or" represents presence of at least one of connected objects, and the symbol "/" in this specification usually indicates an "or" relationship between associated objects.

It should be noted that techniques described in the embodiments of this application are not limited to a long term evolution (Long Term Evolution, LTE) or LTE-Advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

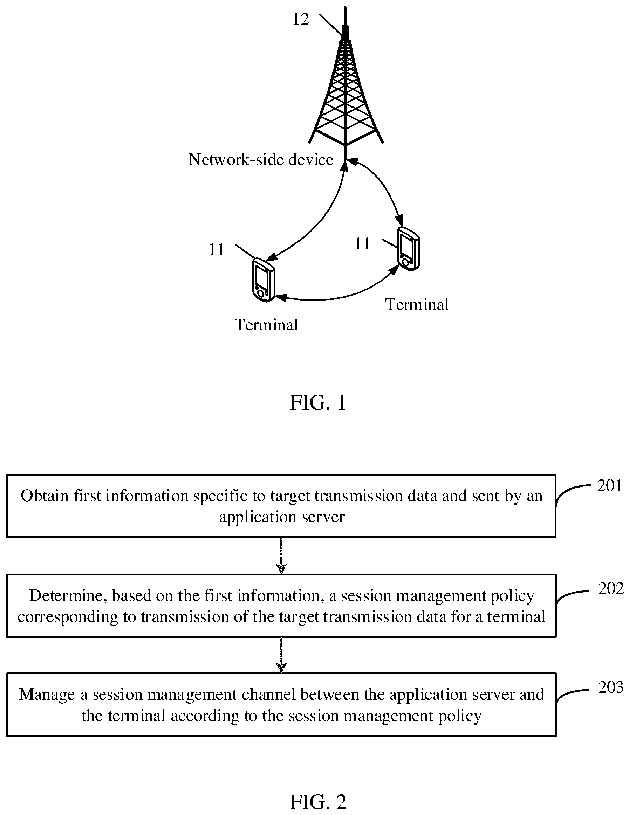

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Networks, WLAN) access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a transmission method provided in the embodiments of this application by using specific embodiments and application scenarios thereof with reference to the accompanying drawings.

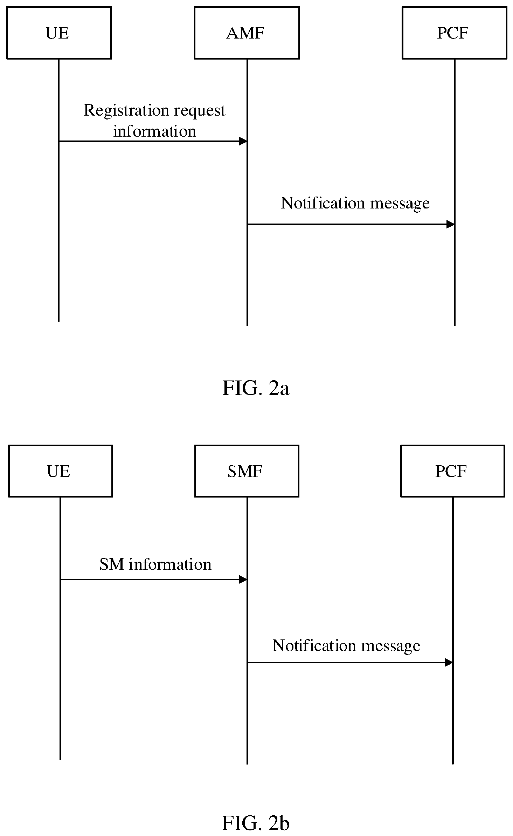

Refer to FIG. 2. FIG. 2 is a flowchart of a transmission method according to an embodiment of this application. It should be noted that the transmission method provided in this embodiment is executed by a network entity. The network entity may be a network data analytics function (Network Data Analytics Function, NWDAF), a policy control function (Policy Control Function, PCF), a session management function (Session Management Function, SMF), an access and mobility management function (Access and Mobility Management Function, AMF), or the like; or the network entity may include various functional entity, such as an NWDAF, a PCF, an SMF, and an AMF. In this embodiment of this application, possible forms of the network entity will be described according to specific implementation scenarios.

As shown in FIG. 2, the transmission method includes the following steps.

Step 201: Obtain first information specific to target transmission data and sent by an application server.

It should be noted that the application server (Application Server, AS) may also be referred to as a third-party server in some embodiments. The application server can perform data transmission with a terminal through the network entity, such as data uploading or data downloading. In this embodiment of this application, the target transmission data between the application server and the terminal may be a type of specific data that the terminal needs to download from the application server or a type of specific data that the terminal needs to upload to the application server. The transmission data may be to-be-downloaded data or to-be-uploaded data. The following implementations of the embodiments of this application will be described by using to-be-downloaded data and an implementation scenario of data downloading as examples.

For example, the target transmission data between the application server and the terminal may be map data specially designed for use in a location (such as a city, country, or geographical region). For example, the terminal moves to a city and may need to download map data of this city. Alternatively, the target transmission data may be filter model data designed for a specific time (for example, five o'clock in the afternoon). Because light at five o'clock in the afternoon is darker than that at twelve o'clock at noon, a filter model corresponding to five o'clock in the afternoon may be designed, for example, the terminal may take photos or videos at around five o'clock in the afternoon and may use the filter model corresponding to that time. Alternatively, the target transmission data may be a deep neural network (Deep Neural Networks, DNN) model for data training at a specific location or a specific time in machine learning. No more other examples are provided in this embodiment of this application.

It can be understood that the terminal needs to perform data transmission with the application server through the network entity, and the network entity may perform information exchange with the application server to manage or allocate communication resources for downloading data as required by the terminal.

In this embodiment of this application, the network entity first obtains the first information specific to the target transmission data and sent by the application server. The first information includes: an identifier of the application server and a statistical value of a size of the target transmission data; and the first information further includes at least one of time information for using the target transmission data and location information for using the target transmission data.

Optionally, the identifier of the application server may be an application server identity code (Application Server Identity document, AS ID), or may be other agreed identification forms, for example, an IP address of the application server or a fully qualified domain name (Fully Qualified Domain Name, FQDN). The statistical value of the size of the target transmission data may be a numerical value of the size of the target transmission data, for example, the size of the target transmission data is 128MB. The time information for using the target transmission data may indicate when the target transmission data is to be used. For example, if the target transmission data is filter model data for five o'clock in the afternoon, the time information for using the target transmission data is five o'clock in the afternoon. The location information for using the target transmission data may indicate where the target transmission data is to be used. For example, if the target transmission data is a map for city A, the location information for using the target transmission data may be city A or an area within 50 kilometers of the city center.

In this embodiment of this application, the first information may include an AS ID, a statistical value of the size of the target transmission data, and time information for using the target transmission data; or the first information may include an AS ID, a statistical value of the size of the target transmission data, and location information for using the target transmission data; or the first information may include an AS ID, a statistical value of the size of the target transmission data, time information for using the target transmission data, and location information for using the target transmission data.

In this embodiment of this application, the following steps may further be included before the step 201:
obtaining second information sent by the application server, where the second information is used for obtaining a statistical parameter for a target data transmission service between the terminal and the application server; and
in response to the second information, determining the statistical parameter for the target data transmission service between the terminal and the application server, and sending third information to the application server, where the third information includes the statistical parameter.

Optionally, before obtaining the first information specific to the target transmission data and sent by the application server, the network entity may first obtain the second information sent by the application server, and after receiving the second information, the network entity determines the statistical parameter for the target data transmission service between the terminal and the application server, and feeds back the statistical parameter to the application server using a third message.

The second information sent by the application server is used for obtaining the statistical parameter for the target data transmission service between the terminal and the application server. For the target data transmission service, the network entity can predict data transmission requirements of the terminal and reserve the terminal communication resources for the transmission target transmission data in advance, so as to avoid a transmission delay caused when the terminal has to request for communication resources from the network through communication signaling before transmitting the target transmission data. Because the network considers the data transmission requirements of the terminal and reserves communication resources for the terminal in advance, the network can properly allocate and manage communication resources of the entire network, thereby reducing and avoiding network congestion.

Optionally, the second information includes at least one of the following:
an identifier of the application server;
time information; and
location information.

The identifier of the application server may be an AS ID or may be other agreed identification forms, for example, an IP (Internet Protocol, IP) address of the application server or an FQDN. That is, the second information sent by the application server to the network entity carries the identifier of the application server, so that the network entity can determine which application server performs data transmission with the terminal, or determine, based on the identifier of the application server, which type of target data is to be transmitted. The time information may be a time for using the target transmission data or a time for performing the target data transmission service. The location information may be a location for using the target transmission data or a location for performing the target data transmission service.

In this embodiment of this application, the second information may include only the identifier of the application server or include the time information or the location information; or the second information may include the identifier of the application server or the time information; or the second information may include the identifier of the application server, the time information, and the location information. The second information may be in other forms, which are not specifically listed herein.

Optionally, the application server sends the second information to the network entity. For example, the second information includes the AS ID, time information, and location information. The second information is a statistical parameter for requesting the terminal to download data at a target time and target location from a specific application server to perform the target data transmission service. For example, the second information includes an AS ID, and the second information is a statistical parameter for requesting the terminal to download data from a specific application server to perform the target data transmission service.

After receiving the second information sent by the application server, the network entity may determine, based on locally collected information, a large number of statistical parameters for the target data transmission service between the terminal and the application server, and use the third information to feed back the statistical parameters to the application server. Furthermore, the application server may determine, based on the statistical parameter, a type of the target transmission data such as a type of to-be-downloaded data. The type of to-be-downloaded data may be a type of data that most terminals may need to download at the target time and target location. The application server can further determine a use time or use location of the to-be-downloaded data. For example, if the to-be-downloaded data is a map designed for a specific location (such as a city, country, or geographical region), the application server can determine, based on the to-be-downloaded data, a location for using the to-be-downloaded data; or if specific download data is a filter model designed for a time (for example, five o'clock in the afternoon), the application server can determine, based on the to-be-downloaded data, a time for using the to-be-downloaded data; or if specific to-be-downloaded data is a DNN model for recognition and training of a landform by a machine learning application, the application server can determine, based on the to-be-downloaded data, a location for using the to-be-downloaded data; and so on.

It should be noted that the third information includes the statistical parameter, the statistical parameter may include at least one of the AS ID, time information, and location information of the target data transmission service between the terminal and the application server, and the third information may include at least one of the AS ID, time information and location information.

Optionally, in the foregoing steps in this embodiment of this application, the network entity may be an NWDAF. That is, the application server sends the second information to the NWDAF to obtain a statistical parameter for the target data transmission service between the terminal and the application server. After receiving the second information, the NWDAF may use locally collected information or collect information from other network functions (Network Function, NF) of the third generation partnership project (3rd Generation Partnership Project, 3GPP) network, so as to determine the statistical parameter for the target data transmission service between the terminal and the application server and feed back the statistical parameter to the application server through the third information. The application server determines, based on the statistical parameter, a statistical value of a size of target transmission data to be transmitted and time information and/or location information for using the target transmission data, and sends first information to the NWDAF.

Alternatively, in the foregoing steps in this embodiment of this application, the network entity may be other network devices including a statistical function similar to that of the NWDAF. For specific implementation, reference may be made to the foregoing description, and details are not repeated herein.

Optionally, before the network entity obtains the second information sent by the application server, the method may further include the following step:
performing subscription to the application server, so as to agree on that the network entity provides the target data transmission service for the application server.

In this embodiment of this application, before the application server sends the second information to the network entity, the network entity, and the application server may first agree, for example, through subscription or other means, that the network entity provides the target data transmission service for the application server. In this way, it can be ensured that the network entity can provide the target data transmission service for the application server that has subscribed to the target data transmission service.

Optionally, the subscription is further used to agree on at least one of the following:
an identifier of the application server that performs the target data transmission service;
time information for performing the target data transmission service; and
location information for performing the target data transmission service.

The identifier of the application server may be an AS ID or may be other agreed identification forms, for example, an IP address of the application server or an FQDN. Through the subscription, the identifier of the application server that performs the target data transmission service can be agreed on, so as to determine for which application server the network entity provides the target data transmission service, so as to ensure accuracy of data transmission. Through the subscription, the time information for performing the target data transmission service can be agreed on, so as to determine when the network entity provides the target data transmission service for the application server. Through the subscription, the location information for performing the target data transmission service can be agreed on, so as to determine a geographical range in which the network entity provides the target data transmission service for the application server. In this way, through the subscription between the network entity and the application server, it can be ensured that only an application server that has subscribed to the target data transmission service can obtain the target transmission service. The identifier of the application server that obtains the target data transmission service can be agreed on. Optionally, the time information and location information can be also agreed on.

Step 202: Determine, based on the first information, a session management policy corresponding to transmission of the target transmission data for a terminal.

In this embodiment of this application, after receiving the first information specific to the target transmission data and sent by the application server, the network entity may determine, based on the first information, the identifier of the application server and the statistical value of the size of the target transmission data, as well as the time and/or location for using the target data transmission by the terminal. In this way, the network entity may formulate, based on the first information, a corresponding session management policy (Session Management policy, SM policy) for the terminal that needs to perform the target data transmission service.

It should be noted that in this step, the network entity may be a PCF, or may be a network device including a PCF. The PCF may directly obtain the first information from the application server and may obtain the first information indirectly through the NWDAF or a network entity with a similar function. For example, using the network entity including a PCF as an example, the network entity may use the PCF to formulate a session management policy for a specific terminal.

Optionally, the step 202 may further include:
obtaining a movement trajectory and movement speed of the terminal, and determining, based on the first information and the movement trajectory and movement speed of the terminal, the session management policy corresponding to transmission of the target transmission data for the terminal.

It can be understood that after the network entity obtains the first information, the time and/or location for using the target transmission data by the terminal and the size of the target transmission data can be determined based on the first information, so that the network entity can predict, based on the current time, the current location of the terminal, and the movement trajectory and speed of the terminal, how long the terminal needs to download the target transmission data, so as to determine the session management policy required by the terminal.

For example, using the target transmission data being map data of city A as an example, the network entity can determine, based on movement trajectory of the terminal (for example, the terminal moves from city B to city A), that the terminal may need to use the map data of city A, and further determine, based on the movement speed of the terminal and current location information of the terminal, at what time the terminal may arrive at city A, so as to determine at what time the terminal needs to use the map data of city A. In this way, the network entity determines a session management policy corresponding to downloading of the map data of city A by the terminal, such as quality of service (Quality of Service, QoS) information, including information such as a data transmission rate. In this way, the network entity can predict use requirements of the terminal for the target transmission data in advance, formulate a session management policy for the target transmission data for the terminal in advance, and reserve transmission data resources for the terminal in advance, thereby improving data transmission service quality of the user and implementing effective management and pre-allocation of network resources.

Step 203: Manage a session management channel between the application server and the terminal according to the session management policy.

In this embodiment of this application, after determining, based on the first information, the session management policy corresponding to transmission of the target transmission data for the terminal, the network entity further manages the session management channel between the application server and the terminal according to the session management policy, for example, modifying the session management channel between the terminal and the application server based on the session management policy; or during establishment of the session management channel between the terminal and the application server, the PCF sends to the SMF a session management policy corresponding to the target transmission data, and triggers the SMF to establish, on the session management channel, a default bearer satisfying the communication requirements of the terminal.

It should be noted that in this step, the network entity may be an SMF, or may be a session management network device including a function similar to that of the SMF. For example, after determining the session management policy, the network entity may send the session management policy to the SMF through the PCF, and manage, through the SMF, a protocol data unit (Protocol Data Unit, PDU) session of the terminal connecting to the application server.

Optionally, the step 203 may include the following steps:
adjusting the session management policy to have a policy for the target data transmission service carried in the session management policy; and
triggering a session management function to perform session management and adjusting quality of service of a PDU session.

In this embodiment of this application, after determining, based on the first information, the session management policy corresponding to transmission of the target transmission data for the terminal, the network entity may dynamically adjust the session management policy. For example, the PCF may add the policy related to the target data transmission service to a session management policy that is to be sent to the SMF serving the terminal, so as to trigger the SMF to perform the related session management procedure. The SMF can adjust quality of service of the PDU session to meet requirements for performing the target data transmission service by the terminal.

In the technical solution provided in this embodiment of this application, the network entity obtains the first information specific to the target transmission data and sent by the application server; determines, based on the first information, the session management policy corresponding to transmission of the target transmission data for the terminal; and manages the session management channel between the application server and the terminal according to the session management policy. In this way, the network entity can predict transmission requirements of the terminal for the target transmission data in advance and can formulate in advance a session management policy for the target data transmission for the terminal, so as to manage the session management channel between the terminal and the application server for the target transmission data, reserve for the terminal in advance communication resources required for data transmission, and proactively configure the communication resources for the terminal. This implements global allocation of communication resources, avoids network congestion, and improves efficiency of data transmission.

Optionally, before the step 202, the method may further include the following steps:
obtaining indication information sent by the terminal, where the indication information is used to indicate whether the terminal supports a target data transmission service with the application server; and
in a case that the terminal is determined, based on the indication information, to support the target data transmission service with the application server, determining, based on the first information, the session management policy corresponding to transmission of the target transmission data for the terminal.

It should be noted that before receiving the first information, the network entity may obtain the indication information sent by the terminal; or after receiving the first information, the network entity may obtain the indication information sent by the terminal.

In this embodiment of this application, the network entity needs to first determine whether the terminal supports the target data transmission service with the application server, and in a case that the terminal is determined to support the target data transmission service with the application server, the network entity can determine, based on the obtained first information, the session management policy corresponding to transmission of the target transmission data for the terminal. Optionally, if the first information indicates that the terminal does not support the target data transmission service with the application server, in a case of receiving this type of first information, the network entity may not need to determine the session management policy corresponding to transmission of the target transmission data for the terminal.

In this way, the network entity obtains the indication information sent by the terminal to determine whether the terminal supports the target data transmission service with the application server, so as to perform corresponding operations according to the content of the indication information.

Optionally, the obtaining indication information sent by the terminal includes any one of the following:
obtaining indication information sent by the terminal based on registration request information during a registration procedure or a periodicity and mobility management procedure; and
obtaining indication information sent by the terminal based on a protocol data unit PDU session establishment message or a PDU session modification message during a session management procedure.

In an implementation, the terminal may send the indication information to the network entity by using a registration request (registration request) during the registration procedure or the periodicity and mobility management procedure, where the indication information indicates whether the terminal supports the target data transmission service with the application server. For example, the indication information may be expressed as an intelligent data transmission support indication or may be expressed in other forms.

Optionally, in a case that the network entity obtains the indication information sent by the terminal based on the registration request information during the registration procedure or the periodicity and mobility management procedure, the indication information is indicated by an unused bit (bit) in a mobility management capability information element (Mobility Management capability IE, for example, 5GMM capability IE) of the registration request information.

Optionally, this bit may alternatively have other detailed implementation manners, for example, the indication information has two pieces of bit information, the first bit information is whether the terminal supports collection of target transmission data, and the second bit information is whether the terminal supports the target data transmission service with the application server.

In this implementation, the network entity may be an AMF, or may be a mobility management entity (Mobility Management Entity, MME) in an evolved packet system (Evolved Packet System, EPS), or may be a network entity responsible for access and mobility management functions in other mobile communication network systems (such as 6G); or the network entity may be a network device including a function similar to that of the AMF.

For example, referring to FIG. 2a, after the AMF receives the indication information sent by the terminal UE based on the registration request information during the registration procedure or the periodicity and mobility management procedure, the AMF sends a notification message to the PCF, where the message may include an identifier of the terminal (for example, UE ID) and the indication information indicating whether the terminal supports the target data transmission service with the application server; then, the PCF can make different responses based on whether the terminal supports the target data transmission service with the application server.

For example, in a case that the terminal indicates the indication information by using one bit and indicates supporting the target data transmission service with the application server, the PCF may add the policy for the target data transmission service to an SM policy subsequently sent to the SMF serving the terminal. Then, according to the policy, the SMF can notify a user plane function entity (User Plane Function, UPF) to collect the target transmission data according to the policy, and the PCF can also dynamically adjust the SM policy, trigger the SMF to perform the session management procedure related to the target data transmission, and adjust the QoS of the PDU session to meet requirements for performing the target data transmission by the terminal.

In a case that the terminal indicates the indication information by using two bits and indicates supporting collection of the target transmission data, the PCF may add the policy for the target data transmission service to the SM policy that is subsequently sent to the SMF serving the terminal, and then the SMF can notify the UPF according to the policy to collect the target transmission data.

Alternatively, in a case that the terminal indicates the indication information by using two bits and indicates supporting the target data transmission service with the application server, the PCF can dynamically adjust the SM policy, trigger the SMF to perform the session management procedure related to the target data transmission, and adjust the QoS of the PDU session to meet requirements for performing the target data transmission by the terminal.

In another implementation, the terminal may indicate, to the network entity using a PDU session establishment message or a PDU session modification message during the session management procedure, whether to support the target data transmission service with the application server, for example, the indication information may be expressed as an intelligent data transmission support indication or may be expressed in other forms.

Optionally, in a case that the network entity obtains the indication information sent by the terminal based on the PDU session establishment message or the PDU session modification message during the session management procedure, the indication information is indicated in any one of the following manners:
an unused bit in a session management capability information element of a session management message; and
a protocol configuration option (Protocol Configuration Option, PCO) information element or EPCO information element in the session management message.

For example, the indication information sent by the terminal may be indicated by using an unused bit in a 5GSM capability IE of an SM message.

Optionally, this bit may alternatively have other detailed implementation manners, for example, the indication information has two pieces of bit information, the first bit information is whether the terminal supports collection of target transmission data, and the second bit information is whether the terminal supports the target data transmission service with the application server.

Alternatively, the indication information sent by the terminal may be implemented through a PCO information element or an EPCO information element of the SM message. The PCO information element or the EPCO information element carries an identifier of the application server. For example, the PCO information element may carry an AS ID, and the indication information also includes the AS ID. In a case that the indication information indicates that the terminal supports the target data transmission service with the application server, it can be then determined, based on the AS ID, to establish a session management channel between the terminal and which application server.

It should be noted that, in this implementation, the network entity may be an SMF, or may be a serving gateway (Serving GateWay, SGW) in the EPS system, or may be a network function entity responsible for a session gateway function in other mobile communication network systems (such as 6G); or the network entity may be a network device including a function similar to that of the SMF.

For example, referring to FIG. 2b, the SMF receives indication information sent by the terminal UE based on an SM message during a session management procedure, where the indication information may be indicated by an unused bit in a 5GSM capability IE of an SM message. The SMF sends to the PCF a notification message, where the notification message may include an identifier of the terminal (for example, UE ID), an AS ID, and indication information indicating whether the terminal supports the target data transmission service with the application server. Then, the PCF can make different responses based on whether the terminal supports the target data transmission service with the application server.

For example, in a case that the terminal indicates the indication information by using one bit and indicates supporting the target data transmission service with the application server, the PCF may add the policy for the target data transmission service to an SM policy subsequently sent to the SMF serving the terminal. Then, according to the policy, the SMF can notify a UPF to collect the target transmission data according to the policy, and the PCF can also dynamically adjust the SM policy, trigger the SMF to perform the session management procedure related to the target data transmission, and adjust the QoS of the PDU session to meet requirements for performing the target data transmission by the terminal.

Alternatively, in a case that the terminal indicates the indication information by using two bits and indicates supporting collection of the target transmission data by the terminal, the PCF may add the policy for the target data transmission service to the SM policy that is subsequently sent to the SMF serving the terminal, and then the SMF can notify the UPF according to the policy to collect the target transmission data.

Alternatively, in a case that the terminal indicates the indication information by using two bits and indicates supporting the target data transmission service with the application server, the PCF can dynamically adjust the SM policy, trigger the SMF to perform the session management procedure related to the target data transmission, and adjust the QoS of the PDU session to meet requirements for performing the target data transmission by the terminal.

In this embodiment of the application, the network entity obtains the indication information sent by the terminal to determine whether the terminal supports the target data transmission service with the application server, and then determines, based on a capability of the terminal and preference, whether to provide the user the target data transmission service with the application server. In this way, the network entity can predict transmission requirements of the terminal for the target transmission data based on the preference of the terminal, reserve transmission data resources for the terminal in advance, and proactively configure data resources for the terminal, thereby improving the efficiency of data transmission.

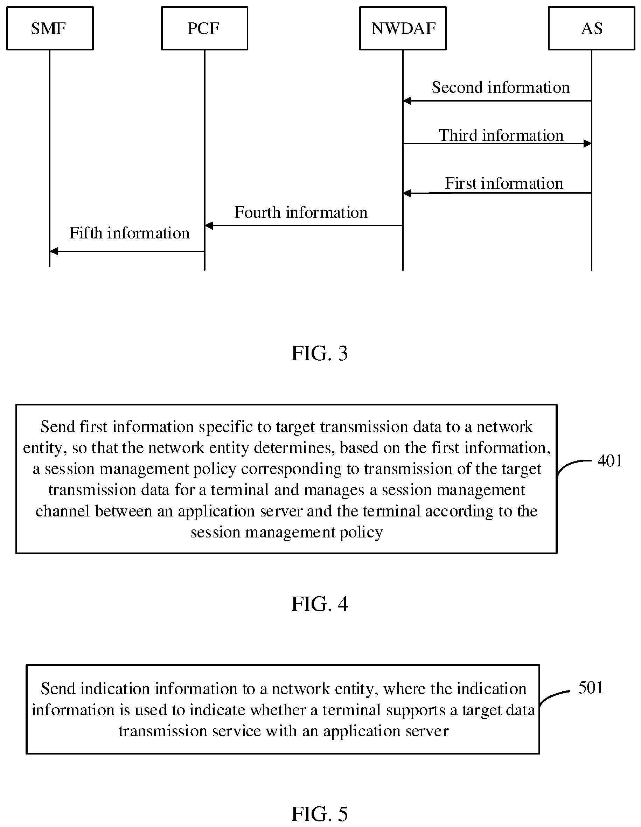

In order to better understand the solution provided in this embodiment of this application, the following uses a specific embodiment for description. Refer to FIG. 3. FIG. 3 is a flowchart of another transmission method according to an embodiment of this application.

Specifically, an NWDAF obtains second information sent by an application server AS, where the second information may include at least one of an AS ID, time information, and location information. The second information is used to request for a statistical parameter for performing a target data transmission service with the application server by the terminal, where the statistical parameter includes at least one of a target time, a target location, and a statistical value of a size of target transmission data to be downloaded from the AS.

After determining, based on information collected locally or information collected from another network function in a 3GPP network, a statistical parameter for the target data transmission service between the terminal and the application server, the NWDAF sends the statistical parameter to the AS by using third information.

Based on the statistical value of the size of the to-be-downloaded target transmission data fed back by the NWDAF, the AS determines a type of the target transmission data, that is, a type of data that most terminals may need to download at the target time and target location. The AS further determines a time and/or location for using the target transmission data, for example, the target transmission data may be a map specially designed for a specific location, or the target transmission data may be a filter model specially designed for a specific time.

The AS sends, to the NWDAF, first information for the target transmission data, where the first information includes an AS ID and the statistical value of the size of the target transmission data, and also includes at least one of the time information and location information of the target transmission data.

After obtaining the first information, the NWDAF sends fourth information to a PCF, where the fourth information includes the AS ID and the statistical value of the size of the target transmission data, and also includes at least one of the time information and location information of the target transmission data. Alternatively, the NWDAF may send the first information to the PCF.

The PCF formulates an SM policy for a target terminal based on the received fourth information or first information. For example, based on information such as the statistical value of the size of the target transmission data to be downloaded by the target terminal, the time information for using the target transmission data, current time information, the location information for using the target transmission data, current location information of the target terminal, and movement trajectory and speed of the target terminal, the PCF predicts how long the target terminal needs to download the target transmission data, and determines QoS information required by the target terminal.

The PCF sends, to an SMF by using fifth information, an SM policy containing the QoS information required by the target terminal. The SMF is an SMF responsible for managing a PDU session of the target terminal connected to the AS. Based on the fifth information sent by the PCF, the SMF initiates a session management procedure and modifies the PDU session to meet the QoS requirements required by the target terminal for downloading the target transmission data. In this way, transmission requirements of the terminal for the target transmission data can be predicted in advance, a session management policy for the target transmission data can be formulated for the terminal in advance, communication resources for data transmission can be reserved for the terminal in advance, and communication resources are proactively configured for the terminal, thereby improving the efficiency of data transmission.

It should be noted that before sending the second information, the AS may alternatively perform subscription with the network entity, so as to agree on that the network entity provides the target data transmission service for the AS. In addition, the terminal may alternatively send indication information to the network entity to indicate whether the terminal supports the target data transmission service with the AS. For the specific implementation, reference may be made to the description in the foregoing embodiment in FIG. 2, and details are not repeated herein.

Refer to FIG. 4. FIG. 4 is a flowchart of another transmission method according to an embodiment of this application. In this embodiment, the transmission method is executed by an application server. As shown in FIG. 4, the transmission method includes the following step:

Step 401: Send first information specific to target transmission data to a network entity, so that the network entity determines, based on the first information, a session management policy corresponding to transmission of the target transmission data for a terminal and manages a session management channel between the application server and the terminal according to the session management policy.

It can be understood that the application server can perform data transmission with the terminal through the network entity, such as data uploading or data downloading. In this embodiment of this application, the target transmission data may be a type of specific data that the terminal needs to download from or upload to the application server. For example, the target transmission data may be map data specially designed for a specific location (such as a city, country, or geographical region), or the target transmission data may be a filter model specially designed for a specific time (for example, five o'clock in the afternoon).

In this embodiment of this application, the application server sends to the network entity the first information specific to the target transmission data. After receiving the first information, the network entity determines, based on the first information, the session management policy corresponding to transmission of the target transmission data for the terminal; and manages the session management channel between the application server and the terminal according to the session management policy. In this way, with the first information that is sent, the network entity can predict transmission requirements of the terminal for the target transmission data in advance and reserve for the terminal in advance communication resources required for data transmission, and the network entity further proactively configures the communication resources for the terminal. This implements global allocation of communication resources, avoids network congestion, and improves efficiency of data transmission.

The first information includes: an identifier of the application server and a statistical value of an amount of the target transmission data; and the first information further includes at least one of time information for using the target transmission data and location information for using the target transmission data.

The identifier of the application server may be an AS ID or may be other agreed identification forms, for example, an IP address of the application server or an FQDN. Optionally, the first information may include an AS ID, a statistical value of the size of the target transmission data, and time information for using the target transmission data; or the first information may include an AS ID, a statistical value of the size of the target transmission data, and location information for using the target transmission data; or the first information may include an AS ID, a statistical value of the size of the target transmission data, time information for using the target transmission data, and location information for using the target transmission data.

In this embodiment of this application, the following steps may further be included before the step 401:
sending second information to the network entity, where the second information is used for obtaining a statistical parameter for a target data transmission service to be performed with the terminal; and
obtaining third information sent by the network entity, where the third information includes the statistical parameter.

Optionally, the network entity may be an NWDAF or other network devices including a statistical function similar to that of the NWDAF. For example, using the NWDAF as an example, the application server first sends the second information to the NWDAF to obtain a statistical parameter for the target data transmission service between the terminal and the application server. After receiving the second information, the NWDAF may use locally collected information or collect information from other network functions (Network Function, NF) of the 3GPP network, so as to determine the statistical parameter for the target data transmission service between the terminal and the application server and feed back the statistical parameter to the application server through the third information. The application server determines, based on the statistical parameter, a statistical value of a size of target transmission data to be transmitted and time information and/or location information for using the target transmission data, and sends first information to the NWDAF.

Optionally, the second information includes at least one of the following:
an identifier of the application server;
time information; and
location information.

The identifier of the application server may be an AS ID or may be other agreed identification forms, for example, an IP address of the application server or an FQDN. The second information may include only the identifier of the application server or include the time information or the location information; or the second information may include the identifier of the application server or the time information; or the second information may include the identifier of the application server, the time information, and the location information. The second information may be in other forms, which are not specifically listed herein.

Optionally, before the sending second information to the network entity, the method further includes:
performing subscription to the network entity, so as to agree on that the network entity provides the target data transmission service for the application server.

In this embodiment of this application, before the application server sends the second information to the network entity, the network entity, and the application server may first agree, for example, through subscription or other means, that the network entity provides the target data transmission service for the application server. In this way, it can be ensured that the network entity can provide the target data transmission service for the application server that has subscribed to the target data transmission service.

Optionally, the subscription is further used to agree on at least one of the following:
an identifier of the application server that performs the target data transmission service;
time information for performing the target data transmission service; and
location information for performing the target data transmission service.

The identifier of the application server may be an AS ID or may be other agreed identification forms, for example, an IP address of the application server or an FQDN. Subscription is performed between the network entity and the application server to agree on at least one of the identifier of the application server that performs the target data transmission service, the time information, and the location information. This can ensure that only the application server having subscribed to the target data transmission service can obtain the target transmission service. The identifier of the application server for obtaining the target data transmission service is agreed on. Optionally, the time information and location information can be also agreed on.

It should be noted that this embodiment is used as an implementation of the application server corresponding to the foregoing method embodiment in FIG. 2. Therefore, reference may be made to the related description in the foregoing method embodiment in FIG. 2, and the same beneficial effects can be achieved. To avoid repetition, details are not described herein again.

Refer to FIG. 5. FIG. 5 is a flowchart of another transmission method according to an embodiment of this application. In this embodiment, the transmission method is executed by a terminal. As shown in FIG. 5, the transmission method includes the following steps:
Step 501: Send indication information to a network entity, where the indication information is used to indicate whether the terminal supports a target data transmission service with an application server.

In this embodiment of this application, the terminal can send the indication information to the network entity to indicate whether the terminal supports the target data transmission service with the application server, so that the network entity determines, based on the indication information, whether the terminal supports the target data transmission service with the application server. In a case that the terminal is determined to support the target data transmission service with the application server, the network entity can determine, based on first information sent by the application server, a session management policy corresponding to transmission of the target transmission data for the terminal. Optionally, if the indication information indicates that the terminal does not support the target data transmission service with the application server, in a case of receiving this type of first information, the network entity may not need to determine the session management policy corresponding to transmission of the target transmission data for the terminal. For the related description of the target data transmission service, reference may be made to the description in the foregoing method embodiments.

The terminal provided in this embodiment of this application sends the indication information to the network entity, so that the network entity needs to determine, based on content of the indication information, whether the terminal supports the target data transmission service with the application server. Operations such as formulating a session management policy and establishing a session management channel for the target transmission data can be performed only in a case that the terminal is determined to support the target data transmission service, so as to better ensure data security for the terminal and avoid data leakage of the terminal.

Optionally, the sending indication information to a network entity may include any one of the following:
sending the indication information to the network entity based on registration request information during a registration procedure or a periodicity and mobility management procedure; and
sending the indication information to the network entity based on a PDU session establishment message or a PDU session modification message during a session management procedure.

In an implementation, the terminal may send the indication information to the network entity by using a registration request (registration request) during the registration procedure or the periodicity and mobility management procedure, where the indication information indicates whether the terminal supports the target data transmission service with the application server. For example, the indication information may be expressed as an intelligent data transmission support indication or may be expressed in other forms.

Optionally, in this implementation, the indication information is indicated by an unused bit in a mobility management capability information element of the registration request information. This bit may alternatively have other detailed implementation manners, for example, the indication information has two pieces of bit information, the first bit information is whether the terminal supports collection of target transmission data, and the second bit information is whether the terminal supports the target data transmission service with the application server.

In another implementation, the terminal may indicate, to the network entity using a PDU session establishment message or a PDU session modification message during the session management procedure, whether to support the target data transmission service with the application server, for example, the indication information may be expressed as an intelligent data transmission support indication or may be expressed in other forms.

Optionally, in this implementation, the indication information is indicated in any one of the following manners:
an unused bit in a session management capability information element of a session management message; and
a PCO information element or EPCO information element in the session management message.

The PCO information element or the EPCO information element carries an identifier of the application server.

It should be noted that this embodiment is an implementation of a terminal corresponding to the method embodiment in FIG. 2 above. Therefore, reference may be made to related descriptions in the method embodiment in FIG. 2 above, and the same beneficial effects can be achieved. To avoid repetition, details are not repeated herein.

It should be noted that, for the transmission method provided by the embodiments of this application, the execution body may be a transmission apparatus or a control module for executing the transmission method in the transmission apparatus. In the embodiments of this application, the transmission method being performed by the transmission apparatus is used as an example to describe the transmission apparatus provided in the embodiments of this application.

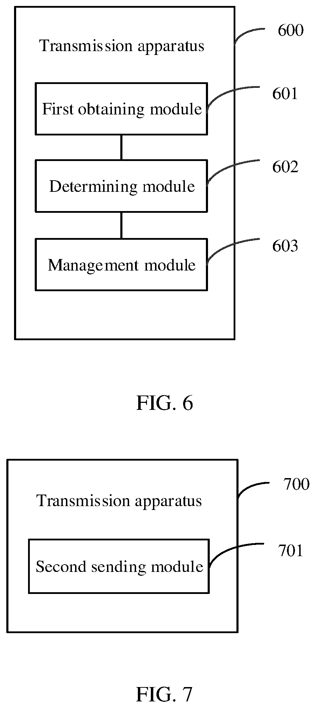

Referring to FIG. 6, FIG. 6 is a structural diagram of a transmission apparatus according to an embodiment of this application not covered by the claims. As shown in FIG. 6, the transmission apparatus 600 includes:
a first obtaining module 601, configured to obtain first information specific to target transmission data and sent by an application server;
a determining module 602, configured to determine, based on the first information, a session management policy corresponding to transmission of the target transmission data for a terminal; and
a management module 603, configured to manage a session management channel between the application server and the terminal according to the session management policy.

Optionally, the first information includes: an identifier of the application server and a statistical value of a size of the target transmission data; and
the first information further includes at least one of time information for using the target transmission data and location information for using the target transmission data.

Optionally, the transmission apparatus 600 further includes:
a second obtaining module, configured to obtain second information sent by the application server, where the second information is used for obtaining a statistical parameter for a target data transmission service between the terminal and the application server; and
a first sending module is configured to: in response to the second information, determine the statistical parameter for the target data transmission service between the terminal and the application server, and send third information to the application server, where the third information includes the statistical parameter.

Optionally, the second information includes at least one of the following:
an identifier of the application server;
time information; and
location information.

Optionally, the transmission apparatus 600 further includes:
a first subscription module, configured to perform subscription to the application server, so as to agree on that the transmission apparatus provides the target data transmission service for the application server.

Optionally, the subscription is further used to agree on at least one of the following:
an identifier of the application server that performs the target data transmission service;
time information for performing the target data transmission service; and
location information for performing the target data transmission service.

Optionally, the determining module 602 includes:
an obtaining submodule, configured to obtain indication information sent by the terminal, where the indication information is used to indicate whether the terminal supports a target data transmission service with the application server; and
a determining submodule, configured to: in a case that the terminal is determined, based on the indication information, to support the target data transmission service with the application server, determine, based on the first information, the session management policy corresponding to transmission of the target transmission data for the terminal.

Optionally, the obtaining submodule is further configured to perform any one of the following:
obtaining indication information sent by the terminal based on registration request information during a registration procedure or a periodicity and mobility management procedure; and
obtaining indication information sent by the terminal based on a protocol data unit PDU session establishment message or a PDU session modification message during a session management procedure.

Optionally, in the case that the obtaining submodule is configured to obtain the indication information sent by the terminal based on the registration request information during the registration procedure or the periodicity and mobility management procedure, the indication information is indicated by an unused bit in a mobility management capability information element of the registration request information.

Optionally, in the case that the obtaining submodule is configured to obtain the indication information sent by the terminal based on the PDU session establishment message or the PDU session modification message during the session management procedure, the indication information is indicated in any one of the following manners:
an unused bit in a session management capability information element of a session management message; and
a protocol configuration option PCO information element or EPCO information element in the session management message.

Optionally, the PCO information element or the EPCO information element carries an identifier of the application server.

Optionally, the determining module 602 is further configured to:
obtain a movement trajectory and movement speed of the terminal, and determine, based on the first information and the movement trajectory and movement speed of the terminal, the session management policy corresponding to transmission of the target transmission data for the terminal.

Optionally, the management module 603 is further configured to:
adjust the session management policy to have a policy for the target data transmission service carried in the session management policy; and
trigger a session management function to perform session management and adjust quality of service of a PDU session.

The transmission apparatus 600 in this embodiment of this application obtains the first information specific to the target transmission data and sent by the application server, so that the network entity can predict, based on the first information, transmission requirements of the terminal for the target transmission data in advance, and can formulate in advance a session management policy for the target data transmission for the terminal, so as to manage the session management channel between the terminal and the application server for the target transmission data, reserve for the terminal in advance communication resources required for data transmission, and proactively configure the communication resources for the terminal. This implements global allocation of communication resources, avoids network congestion, and improves efficiency of data transmission.

It should be noted that the transmission apparatus 600 provided in this embodiment of this application can implement the processes implemented by the network entity in the transmission method embodiment in FIG. 2, with the same technical effects achieved. To avoid repetition, details are not described herein again.

Referring to FIG. 7, FIG. 7 is a structural diagram of another transmission apparatus according to an embodiment of this application not covered by the claims. As shown in FIG. 7, the transmission apparatus 700 includes:
a second sending module 701, configured to send first information specific to target transmission data to a network entity, so that the network entity determines, based on the first information, a session management policy corresponding to transmission of the target transmission data for a terminal and manages a session management channel between the application server and the terminal according to the session management policy.

Optionally, the first information includes: an identifier of the application server and a statistical value of a size of the target transmission data; and
the first information further includes at least one of time information for using the target transmission data and location information for using the target transmission data.

Optionally, the transmission apparatus 700 further includes:
a third sending module, configured to send second information to the network entity, where the second information is used for obtaining a statistical parameter for a target data transmission service to be performed with the terminal; and
a third obtaining module, configured to obtain third information sent by the network entity, where the third information includes the statistical parameter.

Optionally, the second information includes at least one of the following:
an identifier of the application server;
time information; and
location information.

Optionally, the transmission apparatus 700 further includes:
a second subscription module, configured to perform subscription to the network entity, so as to agree on that the network entity provides the target data transmission service for the application server.

Optionally, the subscription is further used to agree on at least one of the following:
an identifier of the application server that performs the target data transmission service;
time information for performing the target data transmission service; and
location information for performing the target data transmission service.

The transmission apparatus 700 provided in this embodiment of this application sends the first information to the network entity, so that the network entity can predict transmission requirements of the terminal for the target transmission data in advance and reserve for the terminal in advance communication resources required for data transmission, and the network entity further proactively configures the communication resources for the terminal. This implements global allocation of communication resources, avoids network congestion, and improves efficiency of data transmission.

It should be noted that the transmission apparatus 700 provided in this embodiment of this application can implement the processes implemented by the application server in the transmission method embodiment in FIG. 4, with the same technical effects achieved. To avoid repetition, details are not described herein again.

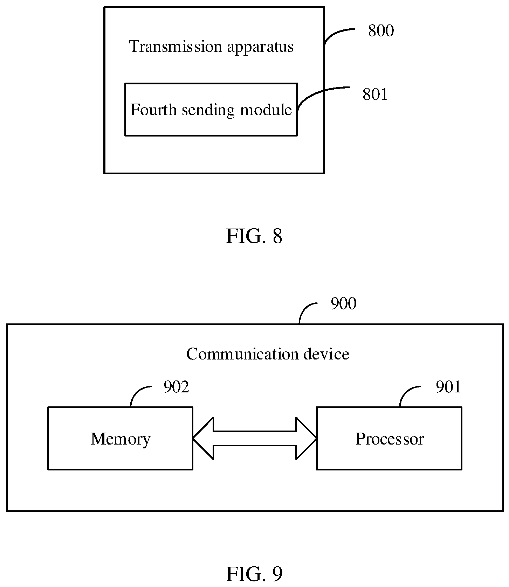

Referring to FIG. 8, FIG. 8 is a structural diagram of another transmission apparatus according to an embodiment of this application not covered by the claims. As shown in FIG. 8, the transmission apparatus 800 includes:
a fourth sending module 801, configured to send indication information to a network entity, where the indication information is used to indicate whether the transmission apparatus supports a target data transmission service with the application server.

Optionally, the fourth sending module 801 is further configured to perform any one of the following:
sending the indication information to the network entity based on registration request information during a registration procedure or a periodicity and mobility management procedure; and
sending the indication information to the network entity based on a PDU session establishment message or a PDU session modification message during a session management procedure.

Optionally, in a case that the fourth sending module 801 is configured to send the indication information to the network entity based on the registration request information during the registration procedure or the periodicity and mobility management procedure, the indication information is indicated by an unused bit in a mobility management capability information element of the registration request information.

Optionally, in a case that the fourth sending module 801 is configured to send the indication information to the network entity based on the PDU session establishment message or the PDU session modification message during the session management procedure, the indication information is indicated in any one of the following manners:
an unused bit in a session management capability information element of a session management message; and
a PCO information element or EPCO information element in the session management message.

Optionally, the PCO information element or the EPCO information element carries an identifier of the application server.

The transmission apparatus 800 provided in this embodiment of this application sends the indication information to the network entity, so that the network entity needs to determine, based on content of the indication information, whether the transmission apparatus 800 supports the target data transmission service with the application server. Operations such as formulating a session management policy and establishing a session management channel for the target transmission data can be performed only in a case that the transmission apparatus 800 is determined to support the target data transmission service, so as to better ensure data security for the transmission apparatus 800 and avoid data leakage.

It should be noted that the transmission apparatus 800 provided in this embodiment of this application can implement the processes implemented by the terminal in the transmission method embodiment in FIG. 5, with the same technical effects achieved. To avoid repetition, details are not described herein again.

As shown in FIG. 9, an embodiment of this application further provides a communication device 900, including a processor 901, a memory 902, and a program or instructions stored in the memory 902 and capable of running on the processor 901. For example, when the communication device 900 is a network entity and when the program or the instructions are executed by the processor 901, the processes of the foregoing method embodiment shown in FIG. 2 are implemented, with the same technical effects achieved. When the communication device 900 is an application server and when the program or the instructions are executed by the processor 901, the processes of the foregoing method embodiment shown in FIG. 4 are implemented, with the same technical effects achieved. When the communication device 900 is a terminal and when the program or the instructions are executed by the processor 901, the processes of the foregoing method embodiment shown in FIG. 5 are implemented, with the same technical effects achieved. To avoid repetition, details are not described herein again.

An embodiment of this application further provides a readable storage medium, where a program or instructions are stored in the readable storage medium. When the program or the instructions are executed by a processor, the processes of the foregoing method embodiment shown in FIG. 2 are implemented, or the processes of the foregoing method embodiment shown in FIG. 4 are implemented, or the processes of the foregoing method embodiment shown in FIG. 5 are implemented. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application not covered by the claims further provides a chip, where the chip includes a processor and a communications interface. The communications interface is coupled to the processor, and the processor is configured to run a program or instructions of a network-side device to implement the processes of the foregoing method embodiment shown in FIG. 2, or the processes of the foregoing method embodiment shown in FIG. 4, or the processes of the foregoing method embodiment shown in FIG. 5, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application not covered by the claims further provides a computer program product, where the computer program product is stored in a non-transient readable storage medium, and when being executed by at least one processor, the computer program product is configured to implement the processes of the foregoing method embodiments shown in FIG. 2, FIG. 4, or FIG. 5, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure. The foregoing describes the embodiments of this application with reference to the accompanying drawings. However, this application is not limited to the foregoing specific embodiments. The foregoing specific embodiments are merely illustrative rather than restrictive.

## Claims

1. A transmission method, executed by a network entity, **characterized in that** the method comprises:
obtaining (201) first information specific to target transmission data and sent by an application server;
determining (202), based on the first information, a session management policy corresponding to transmission of the target transmission data for a terminal; and
managing (203) a session management channel between the application server and the terminal according to the session management policy;
wherein the first information comprises: an identifier of the application server; and
the first information further comprises at least one of time information for using the target transmission data and location information for using the target transmission data.

2. The method according to claim 1, wherein before the obtaining (201) first information specific to target transmission data and sent by an application server, the method further comprises:
obtaining second information sent by the application server, wherein the second information is used for obtaining a statistical parameter for a target data transmission service between the terminal and the application server; and
in response to the second information, determining the statistical parameter for the target data transmission service between the terminal and the application server, and sending third information to the application server, wherein the third information comprises the statistical parameter;
wherein the statistical parameter comprises at least one of a target time, a target location, and a statistical value of a size of target transmission data to be downloaded from the application server.

3. The method according to claim 2, wherein the second information comprises at least one of the following:
an identifier of the application server;
time information; and
location information.

4. The method according to claim 2, wherein before the obtaining second information sent by the application server, the method further comprises:
performing subscription to the application server, so as to agree on that the network entity provides the target data transmission service for the application server;
wherein the subscription is further used to agree on at least one of the following:
an identifier of the application server that performs the target data transmission service;
time information for performing the target data transmission service; and
location information for performing the target data transmission service.

5. The method according to claim 1, wherein the determining (202), based on the first information, a session management policy corresponding to transmission of the target transmission data for a terminal comprises:
obtaining indication information sent by the terminal, wherein the indication information is used to indicate whether the terminal supports a target data transmission service with the application server; and
in a case that the terminal is determined, based on the indication information, to support the target data transmission service with the application server, determining, based on the first information, the session management policy corresponding to transmission of the target transmission data for the terminal.

6. The method according to claim 5, wherein the obtaining indication information sent by the terminal comprises at least one of the following:
obtaining indication information sent by the terminal based on registration request information during a registration procedure or a periodicity and mobility management procedure; and
obtaining indication information sent by the terminal based on a protocol data unit, PDU, session establishment message or a PDU session modification message during a session management procedure.

7. The method according to claim 6, wherein in the case of obtaining the indication information sent by the terminal based on the registration request information during the registration procedure or the periodicity and mobility management procedure, the indication information is indicated by an unused bit in a mobility management capability information element of the registration request information; or
in the case of obtaining the indication information sent by the terminal based on the PDU session establishment message or the PDU session modification message during the session management procedure, the indication information is indicated in any one of the following manners:
an unused bit in a session management capability information element of a session management message; and
a protocol configuration option, PCO, information element or EPCO information element in the session management message.

8. The method according to claim 1, wherein the determining (202), based on the first information, a session management policy corresponding to transmission of the target transmission data for a terminal comprises:
obtaining a movement trajectory and movement speed of the terminal, and determining, based on the first information and the movement trajectory and movement speed of the terminal, the session management policy corresponding to transmission of the target transmission data for the terminal;
and/or
wherein the managing (203) a session management channel between the application server and the terminal according to the session management policy comprises:
adjusting the session management policy to have a policy for the target data transmission service carried in the session management policy; and
triggering a session management function to perform session management and adjusting quality of service of a PDU session.

9. A transmission method, executed by an application server, **characterized in that** the method comprises:
sending (401) first information specific to target transmission data to a network entity, so that the network entity determines, based on the first information, a session management policy corresponding to transmission of the target transmission data for a terminal and manages a session management channel between the application server and the terminal according to the session management policy;
wherein the first information comprises: an identifier of the application server; and
the first information further comprises at least one of time information for using the target transmission data and location information for using the target transmission data.

10. The method according to claim 9, wherein before the sending first information specific to target transmission data to a network entity, the method further comprises:
sending second information to the network entity, wherein the second information is used for obtaining a statistical parameter for a target data transmission service to be performed with the terminal; and
obtaining third information sent by the network entity, wherein the third information comprises the statistical parameter;
wherein the statistical parameter comprises at least one of a target time, a target location, and a statistical value of a size of target transmission data to be downloaded from the application server.

11. The method according to claim 10, wherein the second information comprises at least one of the following:
an identifier of the application server;
time information; and
location information.

12. The method according to claim 10, wherein before the sending second information to the network entity, the method further comprises:
performing subscription to the network entity, so as to agree on that the network entity provides the target data transmission service for the application server;
wherein the subscription is further used to agree on at least one of the following:
an identifier of the application server that performs the target data transmission service;
time information for performing the target data transmission service; and
location information for performing the target data transmission service.

13. A communication device, comprising a processor, a memory, and a program or instructions stored in the memory and capable of running on the processor, wherein when the program or the instructions are executed by the processor, the steps of the transmission method according to any one of claims 1 to 8 are implemented, or the steps of the transmission method according to any one of claims 9 to 12 are implemented.

14. A computer readable storage medium, wherein the readable storage medium stores a program or instructions, and when the program or instructions are executed by a processor, the steps of the transmission method according to any one of claims 1 to 8 are implemented, or the steps of the transmission method according to any one of claims 9 to 12 are implemented.

## Patentansprüche

1. Übertragungsverfahren, durchgeführt durch eine Netzwerkeinheit, **dadurch gekennzeichnet, dass** das Verfahren Folgendes umfasst:
Erlangen (201) erster, für Zielübertragungsdaten spezifischer und von einem Anwendungsserver gesendeter Informationen;
Bestimmen (202) einer Sitzungsverwaltungspolitik entsprechend der Übertragung der Zielübertragungsdaten für ein Endgerät basierend auf den ersten Informationen; und
Verwalten (203) eines Sitzungsverwaltungskanals zwischen dem Anwendungsserver und dem Endgerät gemäß der Sitzungsverwaltungspolitik,
wobei die ersten Informationen Folgendes umfassen: eine Kennung des Anwendungsservers, und wobei die ersten Informationen ferner mindestens eine der folgenden Informationen umfassen: Zeitinformationen zur Nutzung der Zielübertragungsdaten und Standortinformationen zur Nutzung der Zielübertragungsdaten.

2. Verfahren nach Anspruch 1, wobei das Verfahren vor dem Erlangen (201) erster, für Zielübertragungsdaten spezifischer und von einem Anwendungsserver gesendeter Informationen ferner Folgendes umfasst:
Erlangen zweiter, von dem Anwendungsserver gesendeter Informationen, wobei die zweiten Informationen genutzt werden, um einen statistischen Parameter für einen Zieldatenübertragungsdienst zwischen dem Endgerät und dem Anwendungsserver zu erlangen; und
als Reaktion auf die zweiten Informationen Bestimmen des statistischen Parameters für den Zieldatenübertragungsdienst zwischen dem Endgerät und dem Anwendungsserver, und Senden dritter Informationen an den Anwendungsserver, wobei die dritten Informationen den statistischen Parameter umfassen,
wobei der statistische Parameter mindestens eine der folgenden Angaben umfasst: eine Zielzeit, einen Zielstandort und einen statistischen Wert einer Größe von von dem Anwendungsserver herunterzuladenden Zielübertragungsdaten.

3. Verfahren nach Anspruch 2, wobei die zweiten Informationen mindestens eine der folgenden Angaben umfassen:
eine Kennung des Anwendungsservers;
Zeitinformationen; und
Standortinformationen.

4. Verfahren nach Anspruch 2, wobei das Verfahren vor dem Erlangen zweiter, von dem Anwendungsserver gesendeter Informationen ferner Folgendes umfasst:
Durchführen der Anmeldung beim Anwendungsserver, um zu vereinbaren, dass die Netzwerkeinheit den Zieldatenübertragungsdienst für den Anwendungsserver bereitstellt,
wobei die Anmeldung ferner genutzt wird, um mindestens eine der folgenden Angaben zu vereinbaren:
eine Kennung des Anwendungsservers, der den Zieldatenübertragungsdienst durchführt;
Zeitinformationen zum Durchführen des Zieldatenübertragungsdiensts; und
Standortinformationen zum Durchführen des Zieldatenübertragungsdiensts.

5. Verfahren nach Anspruch 1, wobei das Bestimmen (202) einer Sitzungsverwaltungspolitik entsprechend der Übertragung der Zielübertragungsdaten für ein Endgerät basierend auf den ersten Informationen Folgendes umfasst:
Erlangen von von dem Endgerät gesendeten Hinweisinformationen, wobei die Hinweisinformationen genutzt werden, um anzugeben, ob das Endgerät einen Zieldatenübertragungsdienst mit dem Anwendungsserver unterstützt, und
basierend auf den ersten Informationen Bestimmen der Sitzungsverwaltungspolitik entsprechend der Übertragung der Zielübertragungsdaten für das Endgerät, wenn basierend auf den Hinweisinformationen bestimmt wird, dass das Endgerät den Zieldatenübertragungsdienst mit dem Anwendungsserver unterstützt.

6. Verfahren nach Anspruch 5, wobei das Erlangen von von dem Endgerät gesendeten Hinweisinformationen mindestens einen der folgenden Vorgänge umfasst:
Erlangen von von dem Endgerät gesendeten Hinweisinformationen basierend auf Registrierungsanfrageinformationen während eines Registrierungsablaufs oder eines Ablaufs zur Verwaltung von Periodizität und Mobilität; und
Erlangen von von dem Endgerät gesendeten Hinweisinformationen basierend auf Protokolldateneinheit, PDU-,
Sitzungsherstellungsnachricht oder einer PDU-Sitzungsänderungsnachricht während eines Sitzungsverwaltungsablaufs.

7. Verfahren nach Anspruch 6, wobei die Hinweisinformationen bei Erlangen der vom Endgerät gesendeten Hinweisinformationen basierend auf den Registrierungsanfrageinformationen während des Registrierungsablaufs oder des Ablaufs zur Verwaltung von Periodizität und Mobilität von einem ungenutzten Bit in einem Mobilitätsverwaltungsfähigkeitsinformationselement der Registrierungsanfrageinformationen angegeben sind, oder die Hinweisinformationen bei Erlangen der vom Endgerät gesendeten Hinweisinformationen basierend auf der PDU-Sitzungsherstellungsnachricht oder der PDU-Sitzungsänderungsnachricht während des Sitzungsverwaltungsablaufs auf eine der folgenden Weisen angegeben sind:
ein ungenutztes Bit in einem Sitzungsverwaltungsfähigkeitsinformationselement einer Sitzungsverwaltungsnachricht; und
ein Protokollkonfigurationsoptions, PCO-, Informationselement oder ein EPCO-Informationselement in der Sitzungsverwaltungsnachricht.

8. Verfahren nach Anspruch 1, wobei das Bestimmen (202) einer Sitzungsverwaltungspolitik entsprechend der Übertragung der Zielübertragungsdaten für ein Endgerät basierend auf den ersten Informationen Folgendes umfasst:
Erlangen einer Bewegungsbahn und Bewegungsgeschwindigkeit des Endgeräts, und Bestimmen der Sitzungsverwaltungspolitik entsprechend der Übertragung der Zielübertragungsdaten für das Endgerät basierend auf den ersten Informationen und der Bewegungsbahn und Bewegungsgeschwindigkeit des Endgeräts;
und/oder
wobei das Verwalten (203) eines Sitzungsverwaltungskanals zwischen dem Anwendungsserver und dem Endgerät gemäß der Sitzungsverwaltungspolitik Folgendes umfasst:
Anpassen der Sitzungsverwaltungspolitik, um eine Politik für den in der Sitzungsverwaltungspolitik mitgeführten Zieldatenübertragungsdienst zu haben, und
Auslösen einer Sitzungsverwaltungsfunktion, um die Sitzungsverwaltung durchzuführen, und Anpassen der Servicequalität einer PDU-Sitzung.

9. Übertragungsverfahren, durchgeführt durch einen Anwendungsserver, **dadurch gekennzeichnet, dass** das Verfahren Folgendes umfasst:
Senden (401) erster, für Zielübertragungsdaten spezifischer Informationen an eine Netzwerkeinheit, sodass die Netzwerkeinheit basierend auf den ersten Informationen eine Sitzungsverwaltungspolitik entsprechend der Übertragung der Zielübertragungsdaten für ein Endgerät bestimmt und einen Sitzungsverwaltungskanal zwischen dem Anwendungsserver und dem Endgerät gemäß der Sitzungsverwaltungspolitik verwaltet,
wobei die ersten Informationen Folgendes umfassen: eine Kennung des Anwendungsservers, und
wobei die ersten Informationen ferner mindestens eine der folgenden Informationen umfassen: Zeitinformationen zur Nutzung der Zielübertragungsdaten und Standortinformationen zur Nutzung der Zielübertragungsdaten.

10. Verfahren nach Anspruch 9, wobei das Verfahren vor dem Senden erster, für Zielübertragungsdaten spezifischer Informationen an eine Netzwerkeinheit ferner Folgendes umfasst:
Senden zweiter Informationen an die Netzwerkeinheit, wobei die zweiten Informationen genutzt werden, um einen statistischen Parameter für einen Zieldatenübertragungsdienst zu erlangen, der mit dem Endgerät durchzuführen ist; und
Erlangen dritter, von der Netzwerkeinheit gesendeter Informationen, wobei die dritten Informationen den statistischen Parameter umfassen,
wobei der statistische Parameter mindestens eine der folgenden Angaben umfasst: eine Zielzeit, einen Zielstandort und einen statistischen Wert einer Größe von von dem Anwendungsserver herunterzuladenden Zielübertragungsdaten.

11. Verfahren nach Anspruch 10, wobei die zweiten Informationen mindestens eine der folgenden Angaben umfassen:
eine Kennung des Anwendungsservers;
Zeitinformationen; und
Standortinformationen.

12. Verfahren nach Anspruch 10, wobei das Verfahren vor dem Senden zweiter Informationen an die Netzwerkeinheit ferner Folgendes umfasst:
Durchführen der Anmeldung bei der Netzwerkeinheit, um zu vereinbaren, dass die Netzwerkeinheit den Zieldatenübertragungsdienst für den Anwendungsserver bereitstellt,
wobei die Anmeldung ferner genutzt wird, um mindestens eine der folgenden Angaben zu vereinbaren:
eine Kennung des Anwendungsservers, der den Zieldatenübertragungsdienst durchführt;
Zeitinformationen zum Durchführen des Zieldatenübertragungsdiensts; und
Standortinformationen zum Durchführen des Zieldatenübertragungsdiensts.

13. Kommunikationsvorrichtung, umfassend einen Prozessor, einen Speicher und ein Programm oder Anweisungen, das bzw. die in dem Speicher gespeichert ist bzw. sind und auf dem Prozessor ausgeführt werden kann bzw. können, wobei die Schritte des Übertragungsverfahrens nach einem der Ansprüche 1 bis 8 implementiert werden oder die Schritte des Übertragungsverfahrens nach einem der Ansprüche 9 bis 12 implementiert werden, wenn das Programm oder die Anweisungen von dem Prozessor ausgeführt wird bzw. werden.

14. Computerlesbares Speichermedium, wobei das lesbare Speichermedium ein Programm oder Anweisungen speichert und die Schritte des Übertragungsverfahrens nach einem der Ansprüche 1 bis 8 implementiert werden oder die Schritte des Übertragungsverfahrens nach einem der Ansprüche 9 bis 12 implementiert werden, wenn das Programm oder die Anweisungen von einem Prozessor ausgeführt wird bzw. werden.

## Revendications

1. Procédé de transmission, exécuté par une entité de réseau, **caractérisé en ce que** le procédé comprend :
obtenir (201) des premières informations spécifiques aux données de transmission cibles et envoyées par un serveur d'application ;
déterminer (202), sur la base des premières informations, une politique de gestion de session correspondant à la transmission des données de transmission cibles pour un terminal ; et
gérer (203) un canal de gestion de session entre le serveur d'application et le terminal selon la politique de gestion de session ;
dans lequel les premières informations comprennent : un identifiant du serveur d'application ; et les premières informations comprennent en outre au moins une parmi des informations de temps pour utiliser les données de transmission cibles et des informations de localisation pour utiliser les données de transmission cibles.

2. Procédé selon la revendication 1, dans lequel avant l'obtention (201) des premières informations spécifiques aux données de transmission cibles et envoyées par un serveur d'application, le procédé comprend en outre :
obtenir des deuxièmes informations envoyées par le serveur d'application, dans lequel les deuxièmes informations sont utilisées pour obtenir un paramètre statistique pour un service de transmission de données cibles entre le terminal et le serveur d'application ; et
en réponse aux deuxièmes informations, déterminer le paramètre statistique pour le service de transmission de données cibles entre le terminal et le serveur d'application, et envoyer des troisièmes informations au serveur d'application, dans lequel les troisièmes informations comprennent le paramètre statistique ;
dans lequel le paramètre statistique comprend au moins un parmi un temps cible, un emplacement cible et une valeur statistique d'une taille de données de transmission cibles à télécharger à partir du serveur d'application.

3. Procédé selon la revendication 2, dans lequel les deuxièmes informations comprennent au moins l'un des éléments suivants :
un identifiant du serveur d'application ;
des informations de temps ; et
des informations de localisation.

4. Procédé selon la revendication 2, dans lequel avant l'obtention des deuxièmes informations envoyées par le serveur d'application, le procédé comprend en outre :
effectuer l'abonnement au serveur d'application, de manière à convenir que l'entité de réseau fournisse le service de transmission de données cibles pour le serveur d'application ;
dans lequel l'abonnement est en outre utilisé pour convenir d'au moins l'un des éléments suivants :
un identifiant du serveur d'application qui exécute le service de transmission de données cibles ;
des informations de temps pour exécuter le service de transmission de données cibles ; et
des informations de localisation pour exécuter le service de transmission de données cibles.

5. Procédé selon la revendication 1, dans lequel la détermination (202), sur la base des premières informations, d'une politique de gestion de session correspondant à la transmission des données de transmission cibles pour un terminal comprend :
obtenir des informations d'indication envoyées par le terminal, dans lequel les informations d'indication sont utilisées pour indiquer si le terminal prend en charge un service de transmission de données cibles avec le serveur d'application ; et
dans le cas où le terminal serait déterminé, sur la base des informations d'indication, pour prendre en charge le service de transmission de données cibles avec le serveur d'application, déterminer, sur la base des premières informations, la politique de gestion de session correspondant à la transmission des données de transmission cibles pour le terminal.

6. Procédé selon la revendication 5, dans lequel l'obtention d'informations d'indication envoyées par le terminal comprend au moins l'un des éléments suivants :
obtenir des informations d'indication envoyées par le terminal sur la base d'informations de demande d'enregistrement au cours d'une procédure d'enregistrement ou d'une procédure de gestion de la périodicité et de la mobilité ; et
obtenir des informations d'indication envoyées par le terminal sur la base d'un message d'établissement de session d'une unité de données de protocole, PDU, ou d'un message de modification de session PDU au cours d'une procédure de gestion de session.

7. Procédé selon la revendication 6, dans lequel dans le cas d'une obtention des informations d'indication envoyées par le terminal sur la base des informations de demande d'enregistrement au cours de la procédure d'enregistrement ou de la procédure de gestion de la périodicité et de la mobilité, les informations d'indication sont indiquées par un bit inutilisé dans un élément d'information de capacité de gestion de la mobilité des informations de demande d'enregistrement ; ou
dans le cas d'une obtention des informations d'indication envoyées par le terminal sur la base du message d'établissement de session PDU ou du message de modification de session PDU au cours de la procédure de gestion de session, les informations d'indication sont indiquées de l'une des manières suivantes :
un bit inutilisé dans un élément d'information de capacité de gestion de session d'un message de gestion de session ; et
un élément d'information d'option de configuration de protocole, PCO, ou un élément d'information EPCO dans le message de gestion de session.

8. Procédé selon la revendication 1, dans lequel la détermination (202), sur la base des premières informations, d'une politique de gestion de session correspondant à la transmission des données de transmission cibles pour un terminal comprend :
obtenir une trajectoire de mouvement et une vitesse de mouvement du terminal, et déterminer, sur la base des premières informations et de la trajectoire de mouvement et de la vitesse de mouvement du terminal, la politique de gestion de session correspondant à la transmission des données de transmission cibles pour le terminal ;
et/ou
dans lequel la gestion (203) d'un canal de gestion de session entre le serveur d'application et le terminal selon la politique de gestion de session comprend :
ajuster la politique de gestion de session pour avoir une politique pour le service de transmission de données cibles dans la politique de gestion de session ; et
déclencher une fonction de gestion de session pour effectuer la gestion de session et ajuster la qualité de service d'une session PDU.

9. Procédé de transmission, exécuté par un serveur d'application, **caractérisé en ce que** le procédé comprend :
envoyer (401) des premières informations spécifiques aux données de transmission cibles à une entité de réseau, de sorte que l'entité de réseau détermine, sur la base des premières informations, une politique de gestion de session correspondant à la transmission des données de transmission cibles pour un terminal et gère un canal de gestion de session entre le serveur d'application et le terminal selon la politique de gestion de session ;
dans lequel les premières informations comprennent : un identifiant du serveur d'application ; et
les premières informations comprennent en outre au moins une parmi des informations de temps pour utiliser les données de transmission cibles et des informations de localisation pour utiliser les données de transmission cibles.

10. Procédé selon la revendication 9, dans lequel avant l'envoi des premières informations spécifiques aux données de transmission cibles à une entité de réseau, le procédé comprend en outre :
envoyer des deuxièmes informations à l'entité de réseau, dans lequel les deuxièmes informations sont utilisées pour obtenir un paramètre statistique pour un service de transmission de données cibles à effectuer avec le terminal ; et
obtenir des troisièmes informations envoyées par l'entité de réseau, dans lequel les troisièmes informations comprennent le paramètre statistique ;
dans lequel le paramètre statistique comprend au moins un parmi un temps cible, un emplacement cible et une valeur statistique d'une taille de données de transmission cibles à télécharger à partir du serveur d'application.

11. Procédé selon la revendication 10, dans lequel les deuxièmes informations comprennent au moins l'un des éléments suivants :
un identifiant du serveur d'application ;
des informations de temps ; et
des informations de localisation.

12. Procédé selon la revendication 10, dans lequel avant l'envoi des deuxièmes informations à l'entité de réseau, le procédé comprend en outre :
effectuer l'abonnement à l'entité de réseau, de manière à convenir que l'entité de réseau fournisse le service de transmission de données cibles pour le serveur d'application ;
dans lequel l'abonnement est en outre utilisé pour convenir d'au moins l'un des éléments suivants :
un identifiant du serveur d'application qui exécute le service de transmission de données cibles ;
des informations de temps pour exécuter le service de transmission de données cibles ; et
des informations de localisation pour exécuter le service de transmission de données cibles.

13. Dispositif de communication, comprenant un processeur, une mémoire et un programme ou des instructions stockées dans la mémoire et capables de s'exécuter sur le processeur, dans lequel lorsque le programme ou les instructions sont exécutés par le processeur, les étapes du procédé de transmission selon l'une quelconque des revendications 1 à 8 sont mises en œuvre, ou les étapes du procédé de transmission selon l'une quelconque des revendications 9 à 12 sont mises en œuvre.

14. Support de stockage lisible par ordinateur, dans lequel le support de stockage lisible stocke un programme ou des instructions, et lorsque le programme ou les instructions sont exécutés par un processeur, les étapes du procédé de transmission selon l'une quelconque des revendications 1 à 8 sont mises en œuvre, ou les étapes du procédé de transmission selon l'une quelconque des revendications 9 à 12 sont mises en œuvre.
